# EUROPÄISCHE PATENTANMELDUNG

(11) **EP 4 841 209 A1**
(43) Veröffentlichungstag der Anmeldung: **18.11.2026**
(21) Anmeldenummer: 25175586.4
(22) Anmeldetag: 12.05.2025
(51) Int. Cl.: G01B 11/245, G01S 17/00

(54) **VORRICHTUNG ZUR OBERIRDISCH AUSFÜHRBAREN VERMESSUNG UND INSPEKTION VON UNTERIRDISCHEN, AN EINEN SCHACHT ANGESCHLOSSENEN KANÄLEN EINER KANALISATION**

(71) Anmelder: Grapefruit Electronics GmbH, 98693 Ilmenau (DE)
(72) Erfinder: Knust, Lars, 98693 Ilmenau (DE); Heinrich, Lukas, 98693 Ilmenau (DE); Köhler, Florian, 98693 Ilmenau (DE); Kuperan, Mageeban, 98693 Ilmenau (DE)
(74) Vertreter: Meissner Bolte Partnerschaft mbB

(57) **Zusammenfassung**

Die Erfindung betrifft eine Vorrichtung zur oberirdisch ausführbaren Vermessung und Inspektion von insbesondere unterirdischen, an einen Schacht angeschlossenen Kanälen mit Kanalwandung einer Kanalisation oder sonstigen unterirdisch verlegten Rohrsystemen mit einem in den Schacht einbringbaren Messstab, welcher an seinem abzutäufenden Ende eine Abwinkelung aufweist, der in den jeweils zu vermessenden Kanal einführbar ist, wobei die Abwinkelung in einen langgestreckten Messkopf übergeht oder als Messkopf ausgebildet ist, wobei der Messkopf endseitig und bezogen auf seine Längsseite mehrere Messfenster und radial ausgerichtete TOF-Sensoren aufweist, welche eine berührungslose Bestimmung ihres Abstandes zur jeweils nächstliegenden Kanalwandung ermöglichen sowie mit einer Recheneinheit zur Ermittlung des jeweiligen Kanaldurchmessers auf der Basis der von den TOF-Sensoren bereitgestellten Messwerte.

## Beschreibung

Die Erfindung betrifft eine Vorrichtung zur oberirdisch ausführbaren Vermessung und Inspektion von unterirdischen an einen Schacht angeschlossenen Kanälen mit Kanalwandung einer Kanalisation oder sonstigen, unterirdisch verlegten Rohrsystemen, mit einem in den Schacht einbringbaren Messstab, welcher an seinem abzutäufenden Ende eine Abwinkelung aufweist, der in dem jeweils zu vermessenden Kanal einführbar ist, wobei die Abwinkelung in einen langgestreckten Messkopf übergeht oder selbst als Messkopf ausgebildet ist, wobei der Messkopf endseitig und bezogen auf seine Längsachse mehrere Messfenster und radial ausgerichtete TOF-Sensoren aufweist, welche eine berührungslose Bestimmung ihres Abstandes zur jeweils nächstliegenden Kanalwandung ermöglichen sowie mit einer Recheneinheit zur Ermittlung des jeweiligen Kanaldurchmessers auf der Basis der von den TOF-Sensoren bereitgestellte Messwerte gemäß Oberbegriff des Anspruches 1.

Eine gattungsgemäße Vorrichtung ist aus der DE 10 2023 119 999 A1 vorbekannt. Diese bekannte Vorrichtung löst die Aufgabe, oberirdisch Vermessungen von unterirdischen, an einen Schacht angeschlossenen Kanälen einer Kanalisation zu gestatten. Die Vermessung soll schnell und zuverlässig erfolgen, und zwar ohne dass mehrere Personen mit dem Messvorgang beschäftigt sind und wobei zusätzliche Maßnahmen zur Sicherstellung der Arbeitssicherheit entfallen können.

Dabei kommt ein Messkopf zum Einsatz, dessen Längenabmessungen so realisiert sind, dass dieser genügend weit in einen abzweigenden Kanal eines Schachtes eintauchen kann.

Der vorbekannte Messkopf weist endseitig und bezogen auf seine Längsachse mehrere, radial ausgerichtete Sensoren auf, welche eine berührungslose Bestimmung ihres orthogonalen Abstandes zur jeweils nächstliegenden Kanalwandung ermöglichen.

In einer dortigen Weiterbildung ist der Messkopf mit einer optoelektronischen Kamera ausgerüstet. Das von der Kamera aufgenommene Bild wird nach oberirdisch übertragen und dort auf einem Monitor sichtbar oder abgespeichert. Dies erleichtert zum einen das Einführen der Vorrichtung in den jeweiligen Kanal bzw. Kanalabzweig und ermöglicht eine optische Inspektion, zum Beispiel zur Erkennung von Ablagerungen oder Krusten oder zur Definition des Kanalmaterials, zum Beispiel Beton, Keramik, Kunststoff oder dergleichen.

Als Sensoren kommen bevorzugt TOF-Sensoren bzw. 8x8 Multizonen TOF-Sensoren zur Lichtlaufzeitberechnung zum Einsatz.

Eine Auswerteelektronik ist in der Lage, festzustellen, ob womöglich die Vorrichtung mit ihren Sensoren zu dicht an die Wandung des jeweiligen Kanalabzweiges herangeführt wurde. In einem solchen Fall signalisiert die Auswerteeinheit eine Fehlposition und fordert den Bediener auf, die Lage, das heißt den Abstand des Messkopfes von der Wandung zu verändern.

Zur Bestimmung des Durchmessers des jeweils zu vermessenden Kanals auf der Basis der von den Sensoren ermittelten Messwerte kommt bei der bekannten Lösung des Standes der Technik eine algorithmische Kreissegmentberechnung zum Einsatz, wobei eine Fehlerkorrektur des Mess- bzw. Neigungswinkels durch einen weiteren, um 20 Grad geneigten und versetzten Sensor einsetzbar ist.

Aus dem Vorgenannten ist es Aufgabe der Erfindung, die oben beschriebene bekannte Vorrichtung so weiterzubilden, dass ohne aufwändige manuelle Nachkorrekturen beim Messvorgang die nicht immer achsparallele Lage der Längsausdehnung des Messkopfes zur jeweiligen Längsachse des Kanals entzerr- und korrigierbar ist.

Die Lösung der Aufgabe der Erfindung erfolgt mit der Merkmalskombination gemäß der Lehre des Patentanspruches 1, wobei die Unteransprüche mindestens zweckmäßige Ausgestaltungen und Weiterbildungen umfassen.

Es wird also von einer Vorrichtung zur oberirdisch ausführbaren Vermessung und Inspektion von unterirdischen, an einen Schacht angeschlossenen Kanälen mit Kanalwandung einer Kanalisation oder sonstigen, unterirdisch verlegten Rohrsystemen ausgegangen.

Die Vorrichtung umfasst einen, auch längenvariablen, in den Schacht einbringbaren Stab als manuell führbare Haltevorrichtung, nachstehend als Messstab bezeichnet.

Am abzutäufenden Ende weist der Messstab eine Abwinkelung oder eine vergleichbare technische Lösung zur Aufnahme eines Messkopfes auf, der in den jeweils zu vermessenden Kanal einführbar ist.

Alternativ kann die Abwicklung in einen solchen Messkopf übergehen oder mit dem Messkopf integral ausgebildet sein.

Der Messkopf weist endseitig und bezogen auf seine Längsachse mehrere Messfenster und radial ausgerichtete TOF-Sensoren auf, welche eine berührungslose Bestimmung ihres Abstandes zur jeweils nächstliegenden Kanalwandung ermöglichen.

Weiterhin ist eine Recheneinheit zur Ermittlung des jeweiligen Kanaldurchmessers auf der Basis der von den TOF-Sensoren bereitgestellten Messwerte vorgesehen.

Erfindungsgemäß weisen die TOF-Sensoren jeweils eine Vielzahl von Pixel-basierten Empfänger-Messeinheiten sowie eine strahlungsemittierende Sendeeinheit auf. Softwareseitig können bestimmte Sensorbereiche ausgewählt bzw. von der Signalauswertung ausgeschlossen werden.

Mittels einer Optik ist ein zweidimensionaler Sichtbereich für die Empfänger-Messeinheiten vorgegeben.

Die jeweiligen Sichtbereichsgrenzen sind so ausgebildet oder orientiert, dass sich ein quasi umlaufender Sichtbereichsring zur Abbildung der jeweiligen Kanalwandung ergibt.

Die Sichtbereichsgrenzen können dabei aneinander anschließen, sich aber auch zu einem kleineren Teil überdecken.

Die Pixel-basierten Empfänger-Messeinheiten sind mittels Mapping so geschalten, dass jeweils eine Gruppe von radial ausgerichteten umlaufenden Messbereichen und eine Gruppe von axial ausgerichteten umlaufenden Messbereichen gebildet ist.

Die Entfernungsmesswerte zur Kanalwandung entlang der radial ausgerichteten Gruppe von Messbereichen ergeben Querschnittspunkte entlang des untersuchten jeweiligen Kanals, wobei weiterhin zur Entzerrung die Entfernungsmesswerte zur Kanalwandung entlang der axial ausgerichteten Gruppe von Messbereichen herangezogen und hieraus die Messkopfneigung relativ zur jeweiligen Längsachse des jeweiligen Kanals bestimmbar und/oder die Position des Messkopfes relativ zur Kanalwandung ermittelbar ist.

Hierdurch kann mit einem einzigen Messvorgang nicht nur eine annähernde Form des Querschnittes des jeweiligen Kanals ermittelt, sondern auch eine durch Schrägstellung sich ergebende abweichende, z.B. verzerrte "Eiform" oder Ellipsenform korrigiert werden.

Ergänzend werden die Entfernungsmesswerte zur Bestimmung ebener Flächen, insbesondere vom jeweiligen Kanal vorhandener Flüssigkeiten oder fester Rückstände herangezogen. Erkannte derartige ebene Flächen und die diesbezüglichen Messwerte werden bei der weiteren Verarbeitung von Messwerten ignoriert bzw. durch Vergleichswerte bezogen auf bekannte Querschnitte oder Querschnittsflächen von Kanälen ersetzt.

In Weiterbildung der Erfindung weist der Messkopf an seiner Längsstirnseite bzw. seinem längsstirnseitigen Ende eine optoelektronische Kamera mit einer schaltbaren Lichtquelle auf.

Mit Hilfe dieser optoelektronischen Kamera kann nicht nur die momentane Position der Vorrichtung im jeweiligen Kanal oder Kanalabzweig erkannt bzw. bestimmt werden. Vielmehr besteht die Möglichkeit auch, Eigenschaften der Wandung bzw. das Material der Wandung bzw. das Material der Wandung zu erkennen und analytisch zu berücksichtigen.

Der Messstab kann in einer Ausgestaltung der Erfindung teleskopierbar, zum Beispiel als Teleskoprohr ausgebildet sein.

Die eingesetzten TOF-Sensoren zur Lichtlaufzeitbestimmung sind bevorzugt als sogenannte IR (Infrarot)-Sensoren ausgeführt.

Mittels einer Telemetrieeinrichtung oder einer Verkabelung besteht die Möglichkeit einer Datenübertragung zu einem oberirdisch vorgesehenen Empfänger bzw. zu einem Werker.

Innerhalb des Messkopfes kann eine Stromversorgungseinrichtung, insbesondere eine Batterie oder ein Akkumulator angeordnet sein.

Der Messkopf kann eine zusätzliche Tiefenmesssensorik aufweisen. Auch kann der Messstab mit einer Skalierung zur Tiefenbestimmung versehen sein.

Im Messkopf ist bei einer bevorzugten Ausführungsform der Erfindung eine Signalvorverarbeitungselektronik, insbesondere ein Mikrocomputer oder ein Rechner nebst Datenspeichereinheit vorgesehen.

Die Vorrichtung kann zusätzlich einen GPS-Empfänger, ein Magnetometer als elektronischen Kompass, ein Gyrometer und/oder einen Beschleunigungssensor aufweisen. Hierdurch besteht die Möglichkeit der Bestimmung der absoluten geographischen Lage des jeweiligen Rohres oder Kanals durch Kombination der relativen Lagen mittels Augmentierung des Messverfahrens durch Integration von Beschleunigungssensor, Magnetometer, Gyrometer und/oder GPS.

Ergänzend kann eine telemetrische Auslösung der Messung mit Hilfe eines Zusatzgerätes, zum Beispiel auf der Basis einer Bluetooth-Triggerung vorgesehen sein.

Wenn sämtliche Messwerte und Datenpunkte zur Auswertung herangezogen werden, kann grundsätzlich eine Freiformerkennung erfolgen.

Die Erfindung soll nachstehend anhand eines Ausführungsbeispieles sowie unter Zuhilfenahme von Figuren näher erläutert werden.

Hierbei zeigen:
Fig. 1 eine perspektivische Prinzipdarstellung der erfindungsgemäßen Vorrichtung mit ihrem Messkopf nebst Messfenstern für die TOF-Sensoren und der stirnseitig vorgesehenen, hinter einem weiteren Messfenster angeordneten Kamera mit Lichtquelle;
Fig. 2 eine perspektivische Darstellung der Anordnung der TOF-Sensoren mit einer Vielzahl von Pixel-basierten Empfänger-Messeinheiten als eigentlichen Sensorkopf, der im Inneren des vorderen Endes des Messkopfes (Fig. 1) angeordnet ist;
Fig. 3 eine perspektivische Darstellung ähnlich der Fig. 2 mittels der durch Mapping gebildeten Gruppe von radial ausgerichteten umlaufenden Messbereichen; und
Fig. 4 eine Darstellung ähnlich derjenigen nach Fig. 3, jedoch mit der Gruppe von jeweils axial ausgerichteten umlaufenden Messbereichen, die durch entsprechendes Mapping geschaltet bzw. aus den Eingangssignalen ausgewählt sind.

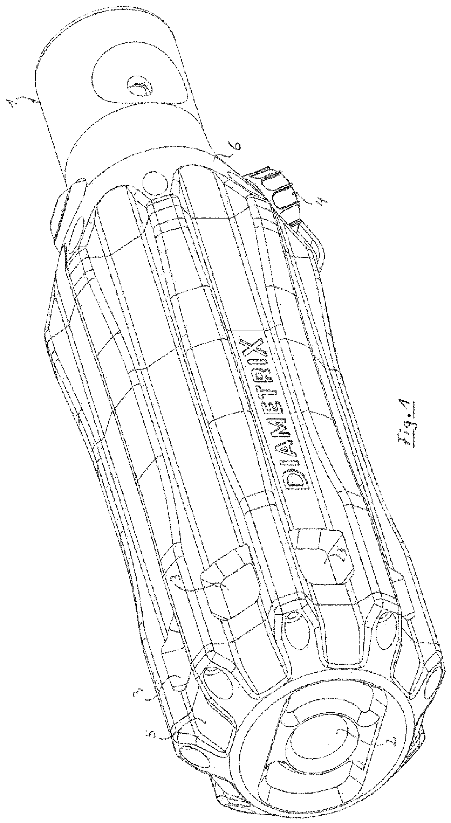

Der in der Figur 1 perspektivisch dargestellte Messkopf der Vorrichtung weist an einem Ende eine Aufnahme für einen anschließbaren Messstab (nicht gezeigt) auf und an seinem gegenüberliegenden, stirnseitigen Ende ein Messfenster 2, welches als optisches Fenster für eine dahinterliegende (in der Figur 1 nicht erkennbar) Kameraeinrichtung dient.

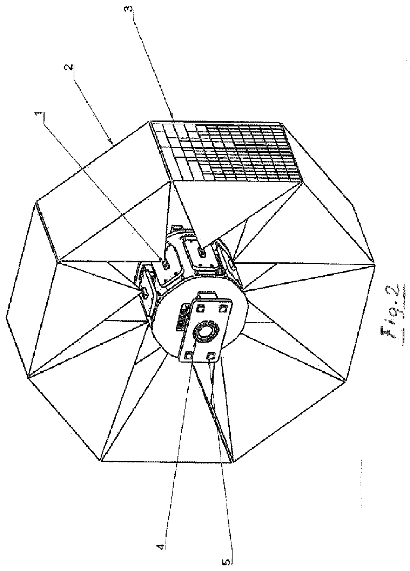

Im Bereich des stirnseitigen Endes sind radial umlaufend weitere Messfenster im Messkopfgehäuse ausgebildet, um strahlungsseitigen Zugang zu dahinterliegenden Gruppen von TOF-Sensoren (siehe die Figuren 2 bis 4) zu ermöglichen.

Hinter einer abnehmbaren Abdeckung 4 verbirgt sich ein Steckanschluss für eine kabelgebundene Datenübertragung.

Die gesamte Vorrichtung ist mit ihrem Gehäuse schutzartgerecht, insbesondere feuchte- und spritzwassergeschützt aufgebaut. Kopfseitig 5 und/oder am messstabseitigen Ende ist eine lösbare Verschraubung vorgesehen, um einen Zugang in das Innere des Messkopfes für Montage- und Reparaturzwecke zu schaffen.

Die Figuren 2 bis 4 zeigen nun verschiedene perspektivische Darstellungen des im Inneren der Vorrichtung nach Fig. 1 befindlichen sensorischen Teiles der Vorrichtung.

Die Figur 2 zeigt beispielhaft die jeweiligen Sensormodule 10 mit ihrem quasi optischen Sichtbereich 20. Einzelne Pixel-bezogene Empfänger-Messeinheiten sind als Einzelzonen 30 des Sichtbereiches 20 symbolisch dargestellt.

Weiterhin ist ein Kameramodul 40 mit strahlungsemittierenden bzw. lichtemittierenden Dioden 50 als Beleuchtungsquellen dargestellt.

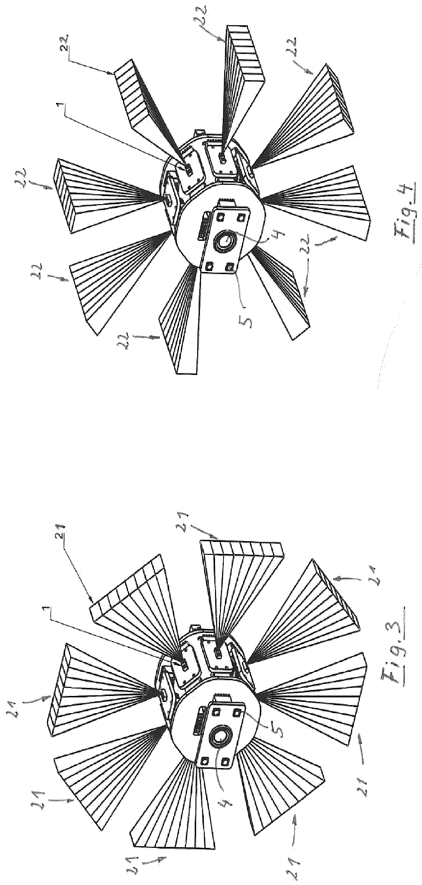

Gemäß Figur 3 wurde der Sichtbereich des Sensormodules 10 nach Mapping in radial verteilte Messbereiche 21 gestaltet. Nach dem abgebildeten Mapping ergeben sich pro Sensor 8 umlaufende radiale Messbereiche. Bei acht Sensoren, also insgesamt 64 radial orientierte, benachbarte Messbereiche.

Im Vergleich hierzu zeigt die perspektivische Darstellung nach Figur 4 den Sichtbereich 10 verschiedener Messbereiche nach einem Mapping zur Ausbildung axial angeordneter Empfänger-Messeinheiten und damit Messbereiche 20.

Bei dem dargestellten Mapping nach Figur 4 entstehen acht Messbereiche pro Sensor. Bei acht Sensoren werden also auch hier 64 entlang der Rohr- oder Kanalwandung axial verteilte Messbereiche realisiert.

Nicht gezeigt sind die im Bereich der Module der TOF-Sensoren befindlichen strahlungsemittierenden Sendeeinheiten, insbesondere eingesetzte strahlungsemittierende Infrarotdioden. Nicht gezeigt ist ebenfalls die vorhandene Optik zur Bildung des zweidimensionalen Sichtbereiches gemäß Figur 2; die jeweiligen Sichtbereichsgrenzen sind wie in Figur 2 angedeutet, so ausgebildet, dass sich quasi ein umlaufender Sichtbereichsring zur Abbildung der jeweiligen Kanalwandung ergibt.

Maßgeblich für die Signalauswertung und ein in optimaler Weise erhaltenes Messergebnis ist die Gestaltung der Pixel-basierten Empfänger-Messeinheiten gemäß den Figuren 3 und 4 mittels Mapping, so dass jeweils eine Gruppe von radial ausgerichteten umlaufenden Messbereichen und eine Gruppe von axial ausgerichteten umlaufenden Messbereichen realisiert werden kann.

Die Entfernungsmesswerte zur Kanalwandung entlang der radial ausgerichteten Gruppe von Messbereichen ergeben Querschnittspunkte entlang des jeweiligen untersuchten Kanals bzw. der untersuchten Kanalwandung. Zur Entzerrung werden die Entfernungsmesswerte zur Kanalwandung entlang der axial ausgerichteten Gruppe von Messbereichen herangezogen. Hieraus wird die Messkopfneigung relativ zur jeweiligen Längsachse des jeweiligen Kanals bestimmt und/oder die Position des Messkopfes relativ zur Kanalwandung ermittelt. Dies ist notwendig, da der Querschnitt ein beliebig geneigter Querschnitt des Kanals oder des entsprechenden Rohres sein kann. Um hieraus den realen Querschnitt zu ermitteln, kommt die beschriebene Technik zum Einsatz. Wie erläutert, werden diesbezüglich die Entfernungsdaten der axial angeordneten Messbereiche verwendet. Durch deren Analyse kann die Neigung der Vorrichtung relativ zur Hauptachse des Rohres oder der Kanalwandung ermittelt werden.

In Weiterbildung der Erfindung kann mittels der eingesetzten TOF-Sensoren die Entfernung zur Oberfläche von Wasser oder ähnlichen ebenen Flächen bestimmt werden. Eine solche ebene Oberfläche wird also nicht ignoriert. Vielmehr ist ein Algorithmus implementiert, um einen etwaigen Wasserstand oder dergleichen zu erkennen. Die auf der beispielhaften Wasseroberfläche liegenden Messpunkte werden durch geometrische Detektion herausgefiltert und diesbezüglich die Wasserfläche als ebene Fläche angenommen. Wird eine solche ebene Fläche im Messbild ermittelt, erfolgt eine entsprechende Berücksichtigung der Messpunkte. Nur die verbleibenden Messpunkte, das heißt die nicht realisierten Messpunkte oder Messwerte werden für den Formerkennungsalgorithmus eingesetzt. Die entstehende Messwertelücke im Messbild wird durch einen Vergleich mit der Form bekannter Querschnitte aus einer Datenbank gefüllt.

Durch die erwähnte Aufspaltung der Pixel-basierten Empfänger-Messeinheiten in radiale und axiale bzw. direktionale Anteile ist eine Selbstlokalisierung der Vorrichtung in Bezug zur Kanalwandung möglich. Durch die Selbstlokalisierung können die drei Rotationsfreiheiten des Gerätes zur Rohr- oder Kanalachse bestimmt werden sowie die zwei Translationsfreiheiten des Gerätes zur Rohr- oder Kanalwandung.

Die dritte Translationsfreiheit ist durch die Selbstähnlichkeit des prismatischen Rohres ausgeschlossen.

Die gewonnenen Informationen aus der Selbstlokalisierung werden genutzt, um die radial gemessenen Zonen zu entzerren und damit den tatsächlichen Querschnitt des Rohres oder Kanalstruktur zu berechnen.

Durch die Bestimmung der relativen Lage der Vorrichtung zur Rohr- oder Kanalachse ist es möglich, die Rohr- oder Kanalachsenneigung zu bestimmen. Dies wird durch den Vektorvergleich zur Gravitationsachse mit Hilfe einer internen Messeinheit umgesetzt. Die Wasserstandserkennung wie vorbeschrieben ermöglicht eine weitere Verbesserung der Qualität und der Genauigkeit des Messergebnisses.

Die entzerrten und gefilterten Messmuster können mit hinterlegten vordefinierten und normgerechten Profilen und Strukturen abgeglichen und sicher bestimmt werden.

Grundsätzlich ist auch die Vermessung anderer prismatischer Hohlkörper möglich, welche sich oberirdisch befinden.

## Patentansprüche

1. Vorrichtung zur oberirdisch ausführbaren Vermessung und Inspektion von unterirdischen, an einen Schacht angeschlossenen Kanälen mit Kanalwandung einer Kanalisation oder sonstigen, unterirdisch verlegten Rohrsystemen, mit einem in den Schacht einbringbaren stabförmigen Gebilde welches an seinem abzutäufenden Ende eine Abwinkelung aufweist, der in den jeweils zu vermessenden Kanal einführbar ist, wobei die Abwinkelung in einen langgestreckten Messkopf übergeht oder als Messkopf ausgebildet ist, wobei der Messkopf endseitig und bezogen auf seine Längsachse mehrere Messfenster und radial ausgerichtete TOF-Sensoren aufweist, welche eine berührungslose Bestimmung ihres Abstandes zur jeweils nächstliegenden Kanalwandung ermöglichen sowie mit einer Recheneinheit zur Ermittlung des jeweiligen Kanaldurchmessers auf der Basis der von den TOF-Sensoren bereitgestellten Messwerte, **dadurch gekennzeichnet, dass**
die TOF-Sensoren jeweils eine Vielzahl von Pixel-basierten Empfänger-Messeinheiten sowie eine strahlungsemittierende Sendeeinheit aufweisen, wobei mittels einer Optik ein zweidimensionaler Sichtbereich für die Empfänger-Messeinheiten vorgegeben ist, wobei die jeweiligen Sichtbereichsgrenzen so ausgebildet sind, dass sich ein quasi umlaufender Sichtbereichsring zur Abbildung der jeweiligen Kanalwandung ergibt, weiterhin die Pixel-basierten Empfänger-Messeinheiten mittels Mapping so geschalten sind, dass jeweils eine Gruppe von radial ausgerichteten umlaufenden Messbereichen und eine Gruppe von axial ausgerichteten umlaufenden Messbereichen gebildet ist, wobei
die Entfernungsmesswerte zur Kanalwandung entlang der radial ausgerichteten Gruppe von Messbereichen Querschnittspunkte entlang des untersuchten jeweiligen Kanals ergeben, wobei weiterhin zur Entzerrung die Entfernungsmesswerte zur Kanalwandung entlang der axial ausgerichteten Gruppe von Messbereichen herangezogen und hieraus die Messkopfneigung relativ zur jeweiligen Längsachse des jeweiligen Kanals bestimmbar und/oder die Position des Messkopfes relativ zur Kanalwandung ermittelbar ist.

2. Vorrichtung nach Anspruch 1,
**dadurch gekennzeichnet, dass**
die Entfernungsmesswerte zur Bestimmung ebener Flächen, insbesondere von im jeweiligen Kanal vorhandener Flüssigkeiten herangezogen und erkannte derartige ebene Flächen und die diesbezüglichen Messwerte bei der weiteren Verarbeitung von Messwerten ignoriert oder durch Vergleichswerte ersetzt werden.

3. Vorrichtung nach Anspruch 1 oder 2,
**dadurch gekennzeichnet, dass**
der Messkopf eine optoelektronische Kamera mit einer Lichtquelle aufweist.

4. Vorrichtung nach einem der vorangegangenen Ansprüche,
**dadurch gekennzeichnet, dass**
das stabförmige Gebilde teleskopierbar ausgebildet ist.

5. Vorrichtung nach einem der vorangegangenen Ansprüche,
**dadurch gekennzeichnet, dass**
die Sensoren als TOF-Sensoren zur Lichtlaufzeitbestimmung als IR-Sensoren ausgeführt sind.

6. Vorrichtung nach einem der vorangegangenen Ansprüche,
**dadurch gekennzeichnet, dass**
eine Telemetrieeinrichtung oder eine Verkabelung zur Datenübertragung zu einem oberirdisch vorgesehenen Empfänger ausgebildet ist.

7. Vorrichtung nach einem der vorangegangenen Ansprüche,
**dadurch gekennzeichnet, dass**
innerhalb des Messkopfes eine Stromversorgungseinrichtung, insbesondere eine Batterie oder ein Akkumulator angeordnet ist.

8. Vorrichtung nach einem der vorangegangenen Ansprüche,
**dadurch gekennzeichnet, dass**
der Messkopf eine zusätzliche Tiefenmesssensorik aufweist.

9. Vorrichtung nach einem der vorangegangenen Ansprüche,
**dadurch gekennzeichnet, dass**
im Messkopf eine Signalvorverarbeitungselektronik sowie eine Datenspeichereinheit vorgesehen ist.

10. Vorrichtung nach einem der vorangegangenen Ansprüche,
**dadurch gekennzeichnet, dass**
selbige einen GPS-Empfänger, ein Magnetometer als elektronischen Kompass, ein Gyrometer und/oder einen Beschleunigungssensor aufweist.
